(19) Europäisches Patentamt
European Patent Office
Office européen des brevets

(11) **EP 1 855 091 B1**

(12) **EUROPÄISCHE PATENTSCHRIFT**

(45) Veröffentlichungstag und Bekanntmachung des Hinweises auf die Patenterteilung:
**12.11.2014 Patentblatt 2014/46**

(51) Int Cl.:
*G01F 9/00* (2006.01)    *G01F 9/02* (2006.01)
*G01M 17/007* (2006.01)    *G01M 15/00* (2006.01)

(21) Anmeldenummer: **06113696.6**

(22) Anmeldetag: **09.05.2006**

(54) **Verbesserung der Wiederholbarkeit bei Verbrauchmessungen durch Normierung**

Improvement of the reproducibility in consumption measurements by standardisation

Amélioration de la reproductibilité lors de mesures de consommation à l'aide d'une mise aux normes

(84) Benannte Vertragsstaaten:
**DE FR GB**

(43) Veröffentlichungstag der Anmeldung:
**14.11.2007 Patentblatt 2007/46**

(73) Patentinhaber: **Ford Global Technologies, LLC
Dearborn, MI 48126 (US)**

(72) Erfinder:
• **Will, Frank
Geelong, Victoria 3220 (AU)**

• **Hoeren, Alexander
42279, Wuppertal (DE)**

(74) Vertreter: **Drömer, Hans-Carsten
Ford-Werke GmbH,
Patentabteilung NH/364
Henry-Ford Str. 1
50725 Köln (DE)**

(56) Entgegenhaltungen:
**EP-A- 1 538 426    DE-A1- 19 901 532
US-A- 4 444 047    US-A1- 2006 089 785**

EP 1 855 091 B1

**Beschreibung**

Die Erfindung betrifft ein Verfahren zur Bestimmung von Kraftstoffverbrauch und/oder der Abgasemissionen von Kraftfahrzeugen an einem Rollenprüfstand, der für Kraftstoffverbrauchs- und Abgasmessungen geeignet ist, wobei der Kraftstoffverbrauch und/oder die Abgasemissionen über eine vorgegebene Fahrkurve ermittelt werden, und wobei eine Abweichung von Ausgangsgrößen von zumindest einer Eingangsgröße abhängig ist, wobei Eingangsgrößen, die einen Einfluss auf den Kraftstoffverbrauch haben, wie der Kraftstoffverbrauch selber während des Tests aufgezeichnet werden, wobei mit den aufgezeichneten Daten ein neuronales Netz trainiert wird, das nach einer Trainingsphase eine Ausgangsgröße in Abhängigkeit der Eingangsgrößen beschreibt, wobei sodann eine normierte Fahrkurve und eine Drehzahlkurve vorgegeben wird, mit der das an einem realen Fahrzeug trainierte neuronale Netz die Ausgangsgröße simuliert, so dass die simulierte Ausgangsgröße der des realen Fahrzeugs entspricht, allerdings derart, als wäre das Fahrzeug der Sollfahrkurve exakt gefolgt.

Die EP 1 538 426 A1 betrifft ein Verfahren nach dem Oberbegriff des Anspruchs 1. Dieses bekannte Verfahren hat sich in der Praxis zur Bestimmung des Kraftstoffsverbrauchs bei normierten Kraftstoffverbrauchstests auf Rollenprüfständen bewährt.

Derartige Verfahren zur Bestimmung des Kraftstoffverbrauchs sind bekannt. Der jeweilige Kraftstoffverbrauch wird entweder aus einer Kohlenstoffbilanz der Abgaswerte berechnet, oder direkt mittels Kraftstoffmessgeräten bestimmt. Den Messungen liegen dabei gesetzlich vorgeschriebenen Fahrzyklen zugrunde, welche die Fahrzeuge während des Testes auf den Rollenprüfständen nachfahren. Ein Fahrer des Fahrzeugs folgt dabei der vorgegebenen Fahrkurve, die sowohl die Geschwindigkeit, als auch bei manuellen Getrieben die Schaltpunkte vorgibt.

Innerhalb enger Toleranzbänder sind Abweichungen der individuellen, realen Fahrkurven von der vorgegebenen Sollfahrkurve nahezu unvermeidbar. Diese Abweichung der tatsächlich gefahrenen Fahrkurve von der vorgegebenen Sollfahrkurve beeinflussen dabei stark die Genauigkeit und Wiederholbarkeit der Messungen.

Die zuvor genannten Abweichungen sind von Fahrer zu Fahrer und von Test zu Test völlig unterschiedlich. Ihr Einfluss auf die Ergebnisse der Kraftstoffverbrauchs- und Abgaswerte sind daher nur schwer abschätzbar. Zudem verlangen immer strengere Abgasvorschriften und sensiblere Entwicklungstests jedoch nach einer immer genaueren Messung der Emissionen und des Kraftstoffverbrauches.

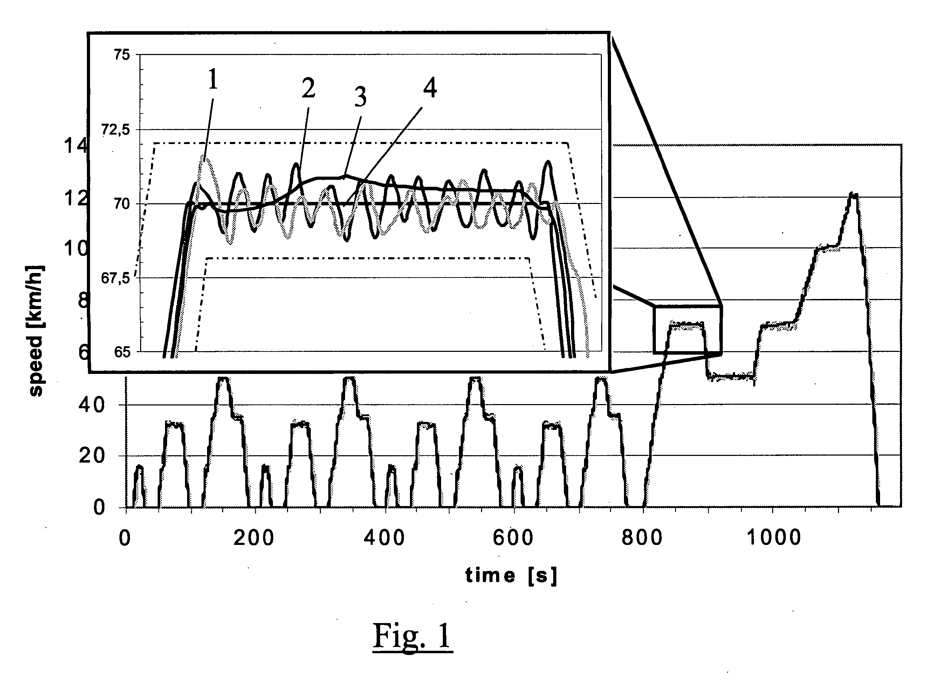

Ein beispielhafter Kraftstoffverbrauchstest wird auf dem Rollenprüfstand durchgeführt, und hat am Beispiel eines NEDC Fahrzyklusses eine gesetzlich vorgegeben Dauer von 1180 Sekunden. Hierbei wird eine vom Gesetzgeber vorgegebene Sollfahrkurve im Rahmen zulässiger Toleranzen von einem Fahrer in einem realen Kraftfahrzeug auf dem Rollenprüfstand nachgefahren. Der während des Tests verbrauchte Kraftstoff wird mit üblichen Mitteln aufgenommen. Allerdings ist es für den Fahrer nicht möglich die Sollfahrkurve exakt nachzufahren. Dies stellt Figur 1 dar. In Figur 1 ist eine Geschwindigkeit des Kraftfahrzeugs über die Testdauer für drei nacheinander gefahrene Tests dargestellt (Kurve 1, 2 und 3). Alle drei realen Fahrkurven liegen innerhalb der gesetzlich erlaubten Abweichung (gestrichelte Linie). Allerdings sind starke Abweichungen zu der vorgegebenen Sollfahrkurve (Kurve 4) erkennbar.

Die US 5,372,035 betrifft einen Roboter zum Betreiben eines Kraftfahrzeugs auf einem Chassisdynamometer. Der Roboter weist einen Roboterkörper und ein Steuergerät, das eine Steuereinheit und eine Fahrereinheit beinhaltet, wobei das Steuergerät mit dem Roboterkörper verbunden ist. Der Roboter weist weiter Stellglieder auf, die ein Gaspedalstellglied zur Bedienung eines Gaspedals des Fahrzeugs, ein Zündschlüsselstellglied zur Bedienung eines Fahrzeugzündschlüssels und eine Hauptstromquelle, die mit der Fahrereinheit verbunden ist, beinhaltet. Der Roboter weist zudem eine Notstromquelle auf, die mit der Fahrereinheit und dem Gaspedalstellglied sowie dem Zündschlüsselstellglied verbunden ist, um ein Notbediensteuersignal zur Verfügung zu stellen, das das Gaspedal in eine neutrale Position mit dem Strom der Notstromquelle zurückstellt, wenn der Strom aus der Hauptstromquelle ausfällt. Zudem wird der Zündschlüssel gedreht, so dass ein Motor des Fahrzeugs ausgestellt wird, nachdem das Gaspedal in die neutrale Position zurückgestellt ist.

Hierbei wird ein Roboter zum Betreiben eines Kraftfahrzeugs offenbart, der in der Lage ist, den Motor des Kraftfahrzeugs auch im Fall eines unvorhergesehenen Störfalls, wie z.B. des Ausfalls der Spannungsversorgung oder aufgrund eines Betriebsfehlers sicher anzuhalten. Als Nachteil dieses Verfahrens ist der kapitalintensive Einsatz und aufwändige Einbau des Roboters zu nennen.

Die US 4,444,047 A offenbart dagegen eine Einrichtung zum Ermitteln des momentanen Kraftstoffverbrauchs von Brennkraftmaschinen. Die Einrichtung weist Mittel zur Erzeugung elektrischer Signale auf. Die elektrischen Signale zeigen die Drehzahl der Brennkraftmaschine und eine zurückgelegte Wegstrecke an. Die Einrichtung weist ferner einen Geber auf, der Informationen über die Stellung eines Fahrpedals liefert. Weiterhin ist eine elektrische Schaltung vorgesehen, die in Abhängigkeit von der Stellung des Fahrpedals, von der momentanen Motordrehzahl und von vorgegebenen, von der Fahrpedalstellung abhängigen Kraftstoffverbrauch-Motordrehzahl-Kennlinien ein Ausgangssignal liefert. Damit kann eine Angabe über den momentanen Kraftstoffverbrauch gemacht und in Volumen pro Weg oder Zeit angezeigt werden.

Der vorliegenden Erfindung liegt die Aufgabe zugrunde, ein verbessertes Verfahren zur Bestimmung des Kraftstoffverbrauches bei Kraftstoffverbrauchtests mit vorgegebenen Parametern zur Verfügung zu stellen, bei dem eine durch Schwankungen verursachte Streuung der Verbrauchsergebnisse minimiert wird, wobei eine verbesserte Wiederholbarkeit der Messungen erreicht werden soll.

Erfindungsgemäß wird dies durch ein Verfahren mit den Merkmalen des Anspruchs 1 erreicht, wobei die Eingangsgröße eine Fahrpedalstellung ist, die normiert wird, und wobei als Eingangsgröße eine Betätigungsgeschwindigkeit und/oder Beschleunigung des Fahrpedals normiert wird

Damit wird die zumindest eine Eingangsgröße, insbesondere die Fahrpedalstellung normiert, wodurch eine verbesserte Wiederholbarkeit von Kraftstoffverbrauchs- und Abgasmessungen durchführbar ist. Die Ausgangsgrößen sind bevorzugt der Kraftstoffverbrauch und/oder die Abgasemissionen (z.B. HC, $NO_x$, CO, $CO_2$). Hierbei wird der Fahrereinfluss mittels des künstlichen neuronalen Netzes eliminiert. Das neuronale Netz weist die Fähigkeit auf, aus gemessenen Daten nichtlineare Zusammenhänge in Form von mathematischen Modellen zu lernen. Nach der Trainingsphase wird die in den Daten enthaltene Information durch das neuronale Netz abgebildet. Trainiert man das neuronale Netz mit der realen Fahrkurve, so ist das Verhalten des Kraftfahrzeugs bezüglich Kraftstoffverbrauch, aber auch bezüglich von Emissionen abbildbar. Wird mit dem trainierten Netz ein erneuter Test simuliert, wobei als veränderte Eingangsgröße die normierte Fahrkurve vorgegeben wird, lässt sich aus der Differenz der beiden Ergebnisse der Fahrereinfluss abschätzen und berücksichtigen. Durch dieses verbesserte Verfahren wird die Genauigkeit und Wiederholbarkeit der Messungen verbessert, wobei gleichzeitig die Anzahl der Tests reduzierbar ist.

Der Erfindung liegt die Erkenntnis zugrunde, dass die Fahrpedalstellung unmittelbar Einfluss auf die Drehzahl bzw. Last des Motors und somit auf die Geschwindigkeit des Fahrzeugs hat. Natürlich kann das Fahrpedal von dem Fahrer in unterschiedlichen Betätigungsgeschwindigkeiten und/oder Beschleunigungen betätigt werden. Günstig im Sinne der Erfindung ist, wenn als Eingangsgröße daher die Betätigungsgeschwindigkeit und/oder Beschleunigung des Fahrpedals normiert wird.

Zweckmäßig im Sinne der Erfindung ist, wenn eine der Sollfahrkurve entsprechende Soll-Fahrpedalstellung über den Testzyklus ermittelt bzw. berechnet wird.

Vorteilhaft wird ein Diagnosewerkzeug (ATI) und Daten aus der Motorsteuerung als Eingangsgröße (Fahrpedalstellung) und als Ausgangsgröße (berechneter Kraftstoffverbrauch) verwendet, so dass auf ein kostenintensives Verbrauchsmessgerät verzichtet werden kann. Dieses kostenintensive Verbrauchmessgerät könnte beispielsweise als dynamisches Kraftstoffmessgerät direkt in einer Kraftstoffleitung des Motors vorgesehen sein.

Das Verfahren ist im Sinne der Erfindung auf alle Tests anwendbar, bei denen streuende Testbedingungen, insbesondere von Randbedingungen und Eingangsgrößen einen signifikanten Einfluss auf das Ergebnis haben.

Weitere vorteilhafte Ausführungen des Verfahrens sind in den Unteransprüchen und der folgenden Beschreibung offenbart. Es zeigen:

Fig. 1 bis Fig. 13    Messkurven.

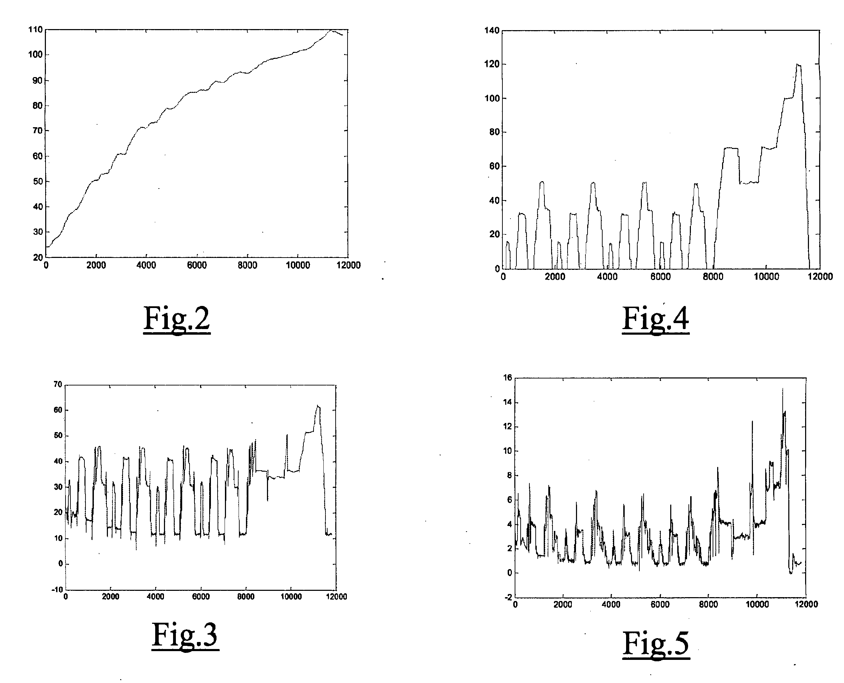

Figur 1 zeigt die Geschwindigkeitskurve eines herkömmlichen, beispielhaften Kraftstoffverbrauchstestes. Der Kraftstoffverbrauchstest wird auf einem Rollenprüfstand durchgeführt, der für Kraftstoffverbrauchs- und Abgasmessungen geeignet ist. Hierbei wird eine, vorzugsweise von einem Gesetzgeber vorgeschriebene Fahrkurve im Rahmen der zulässigen Toleranzen von einem Fahrer in einem realen Fahrzeug nachgefahren. Der beispielhafte Kraftstoffverbrauchstest hat eine Dauer von 1180 Sekunden. In den Figuren 2 bis 5 werden während der Dauer des Kraftstoffverbrauchstests von 1180 Sekunden unterschiedliche Eingangsgrößen gemessen und mit 10Hz, was 10 Messpunkten pro Sekunde entspricht aufgezeichnet. Beispielhafte Eingangsgrößen sind

- die Motortemperatur (Figur 2)
- die Drehzahl (Figur 3)
- die Fahrzeuggeschwindigkeit (Figur 4),
- ein Kraftstoff-Luft-Verhältnis (nicht dargestellt),
- der Kraftstoffverbrauch selber (Figur 5).

Die Motortemperatur hat einen Einfluss auf den Kraftstoffverbrauch, denn je wärmer der Motor ist, desto geringer ist seine innere Reibung, so dass weniger Kraftstoff verbraucht wird. Je schneller ein Motor dreht, desto mehr Kraftstoff wird benötigt. Die Fahrzeuggeschwindigkeit und Ihre Änderung pro Zeiteinheit (Beschleunigung bzw. Verzögerung) sind zusammen mit der Drehzahl ein Maß für eine Last des Fahrzeugs. Je höher die Last ist, desto höher ist der Kraftstoffverbrauch. Gleiches gilt für eine Fahrpedalstellung. Je tiefer das Fahrpedal gedrückt wird, desto höher ist die Last bzw. die Drehzahl bzw. die Geschwindigkeit des Fahrzeugs, so dass der Kraftstoffverbrauch höher ist. Wenn der Motor kalt ist, hat er eine höhere innere Reibung und es wird das Kraftstoff-Luft-Verhältnis erhöht, der Motor wird "fetter" gefahren, was ebenfalls den Kraftstoffverbrauch beeinflusst.

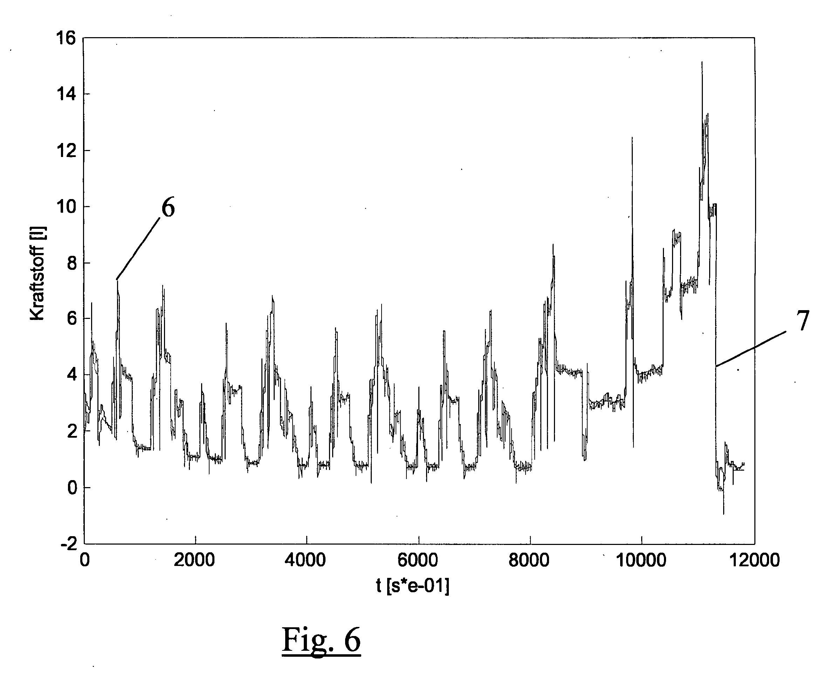

Mit den aufgezeichneten Daten wird ein neuronales Netz, insbesondere ein schnelles neuronales Netz auf eine Ausgangsgröße, vorzugsweise auf den Kraftstoffverbrauch hin trainiert. Figur 6 zeigt anhand der Kurve 6 den über die Testdauer aufgezeichneten Kraftstoffverbrauch. Der simulierte Kraftstoffverbrauch (Kurve 7) der Simulation ist dem realen (Kurve 6) überlagert. Dies bedeutet, dass dem neuronalen Netz zur Simulation die gleichen Eingangsgrößen gegeben wurden, mit dem es vorher trainiert wurde. Idealerweise sind beide Kurven 6 bzw. 7 bei einer optimalen Simulation absolut deckungsgleich. Erkennbar ist, dass mit den gewählten Messgrößen eine sehr gute und ausreichend genaue Simulation erreichbar ist. Eine Differenz in diesem Ausführungsbeispiel zwischen gemessenem (10,05331/100km) und simuliertem (10,05001/100km) Kraftstoffverbrauch beträgt lediglich 0,032%.

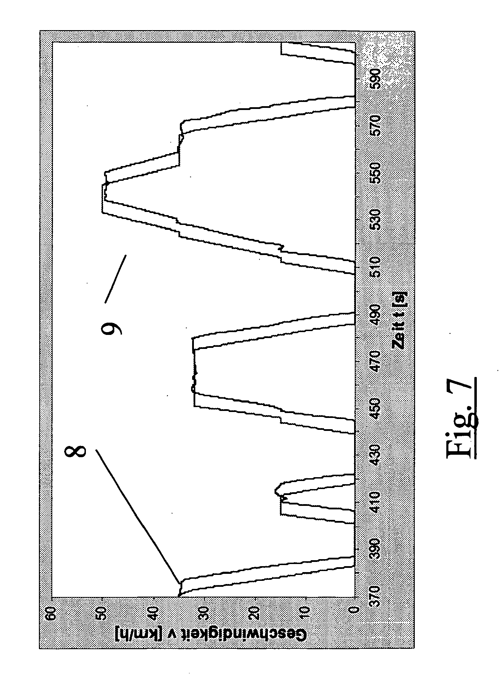

Nunmehr wird mit dem am realen Fahrzeug trainierten neuronalen Netz mit den normierten Eingangsgrößen eine Simulation vorgenommen. Hierzu werden vorzugsweise die Eingangsgrößen Geschwindigkeit und Drehzahl normiert. In Figur 7 ist sowohl die reale Fahrkurve (Kurve 8) als auch die Sollfahrkurve (Kurve 9) aufgezeichnet. Die Fahrkurve, also die Kurve der Fahrzeuggeschwindigkeit ist als normierte Eingangsgröße leicht vorgebbar. Zu beachten ist allerdings ein Zeitversatz zwischen den Kurven 8 bzw. 9. Dieser tritt dadurch auf, dass nicht jeder Test immer absolut zeitgleich nach dem Beginn der Datenaufzeichnungen gestartet wird. Vorteilhafterweise werden die beiden Kurven mittels eines Korrelationsverfahren zur Deckung gebracht. Hierbei wird die zeitliche Verschiebung korrigiert.

Das bevorzugte Korrelationsverfahren nähert eine mittlere Verschiebung auf indirektem Wege an. Hierbei wird vorrausgesetzt, dass die gesuchte Verschiebung gefunden ist, wenn nach einer Schrittweisen Rückverschiebung der Unterschied zwischen den beiden Geschwindigkeitsverläufen sein Minimum erreicht hat. Ein geeignetes Maß, diese Unterschiede bzw. Übereinstimmungen zu quantifizieren stellt ein empirischer Korrelationskoeffizient dar (Gleichung 1).

$$r = \frac{s_{real,norm}}{s_{real} \cdot s_{norm}} = \frac{\sum_{i=1}^{n} \left( v_{real,i} - \overline{v}_{real} \right) \cdot \left( v_{norm,i} - \overline{v}_{norm} \right)}{\sqrt{\sum_{i=1}^{n} \left( v_{real,i} - \overline{v}_{real} \right)^2 \cdot \sum_{i=1}^{n} \left( v_{norm,i} - \overline{v}_{norm} \right)^2}} \qquad \text{Gleichung 1}$$

$$\overline{v} = \frac{1}{n} \cdot \sum_{i=1}^{n} v_i$$

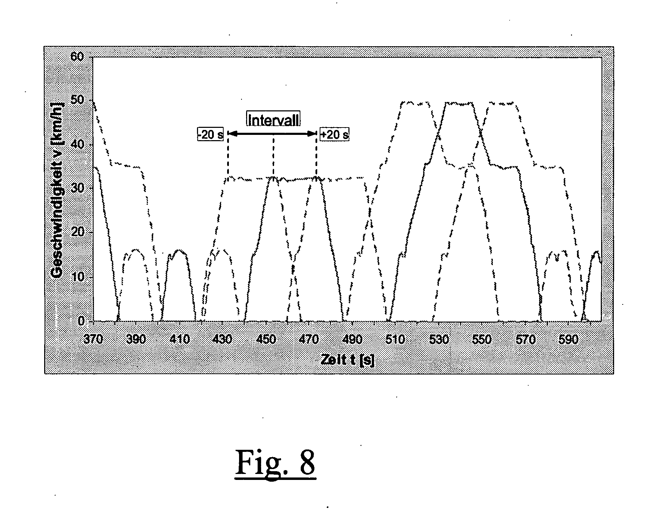

Figur 8 zeigt ein Verschiebungsintervall der realen Geschwindigkeit.

Mit der Annahme, dass die gesuchte Verschiebung einen bestimmten Grenzbetrag nicht überschreitet, wird der Datenkanal (=Eingangsgröße) der realen Geschwindigkeit innerhalb eines durch die Grenzwerte bestimmten Intervalls schrittweise verschoben. Der Grenzbetrag beträgt in dem bevorzugten Ausführungsbeispiel 20 Sekunden (Figur 8).

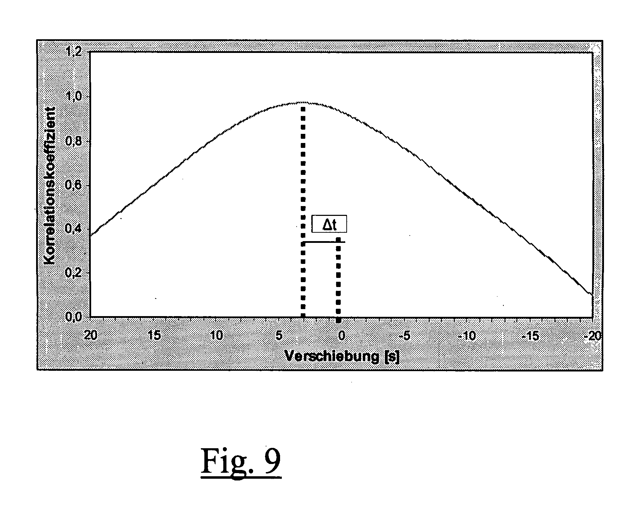

Zu jedem Schritt wird der Korrelationskoeffizient in einem zuvor festgelegten, hinreichend großen Teilbereich des Zyklus bestimmt. Damit ist aus dem sich ergebenen Verlauf, einer so genannten Kreuzkorrelationsfunktion, ein Maximum bestimmbar (Figur 9). Dieses Maximum identifiziert die Verschiebung, bei der die Abweichungen der einander zugeordneten Datenpunkte am geringsten ist. Dies bedeutet, dass bezüglich der Synchronisation ein Optimum gefunden ist. Der gesamte Messwertdatensatz, dies sind alle gemessenen Datenkanäle, wird dauerhaft um den ermittelten zeitlichen Betrag in die entsprechende Richtung verschoben. Eventuell entstehende Datenlücken am Anfang bzw. Ende werden durch die jeweiligen Start- bzw. Endwerte aufgefüllt.

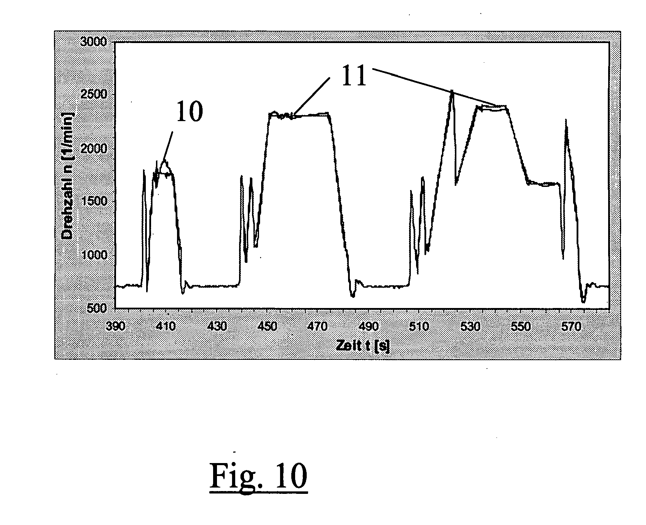

Figur 10 zeigt eine Normierung der Drehzahl. Eine reale Drehzahlkurve trägt das Bezugszeichen 10. Eine normierte Drehzahlkurve trägt das Bezugszeichen 11. Üblicherweise ist über den Übersetzungsverhältnissen des Getriebes die sich aus der Geschwindigkeit ergebende Motordrehzahl für jeden Fahrzeugtyp unterschiedlich. Von daher muss die normierte Drehzahl aus den Übersetzungsverhältnissen und der Geschwindigkeit hergeleitet werden.

In einem ersten Ansatz berechnet sich ein i-ter Datenpunkt nach Gleichung 2:

$$n_{norm,i} = \frac{n_{real,i}}{v_{real,i}} \cdot v_{norm,i} \qquad \text{Gleichung 2}$$

Allerdings ist die Gleichung 2 nicht uneingeschränkt anwendbar. Diese ist nur in Bereichen definiert, in denen eingekuppelt ist, also z. Bsp. nicht während Schaltvorgängen. Des weiteren darf die normierte Drehzahl bei Stillstand niemals auf Null absinken. Daher werden die Werte der realen Drehzahl an den betreffenden Stellen übernommen. Der Normierungseffekt wird dadurch zwar reduziert, allerdings wird auch eine Verfälschung der Zusammenhänge vermieden. Das Ergebnis der Berechnung ist in Figur 10 dargestellt. Ein ideal normierter Verlauf würde in den Abschnitten konstanten Übersetzungsverhältnisses, d.h. im eingekuppelten Zustand, wie die Sollfahrkurve geradlinig verlaufen. Obwohl Drehzahlschwankungen meist sichtbar geglättet werden, wird das Optimum nur an wenigen Stellen erreicht. Der Grund dafür liegt einerseits im Messrauschen der einfließenden Größen. Zum anderen ist eine sichere Zuordnung der einzelnen Messpunkte aufgrund des zeitlichen Toleranz-Bereichs nach wie vor nicht möglich. Insbesondere Anfahrvorgänge sowie ein Auskuppeln vor einer Leerlauf-Phase sind in diesem Zusammenhang als problematisch zu beurteilen. Hier ergeben sich ohne Korrektur durch große lokale Übersetzungsverhältnisse und zeitliche Verschiebungen unrealistische Drehzahl-Spitzen. Bis zu einer Geschwindigkeit von 5km/h wird daher ebenfalls die reale Drehzahl übernommen.

In weiteren zeitlich definierten Intervallen werden feste Übersetzungsverhältnisse verwendet. Dabei berechnet sich die normierte Drehzahl in eingekuppelten Bereichen nach Gleichung 3. Das Übersetzungsverhältnis ü ist darin noch von einer eingelegte Gangstufe abhängig, welche ihrerseits durch die Stelle i identifiziert wird.

$$n_{norm,i} = \ddot{u}(i) \cdot v_{norm,i} \qquad\qquad \text{Gleichung 3}$$

Für die einzelnen Übersetzungsverhältnisse der Gangstufen werden zuvor gemittelte Werte auf Grundlage der Messdaten berechnet. Auf diese Weise wird der Einfluss des Messrauschens weitestgehend neutralisiert. Durch die datenbasierte Ermittlung der Übersetzungsverhältnisse ist darüber hinaus eine universelle Verwendung des Algorithmus weiterhin möglich, ohne zusätzliche Parameter, die auf Getriebedaten beruhen, berücksichtigen zu müssen.

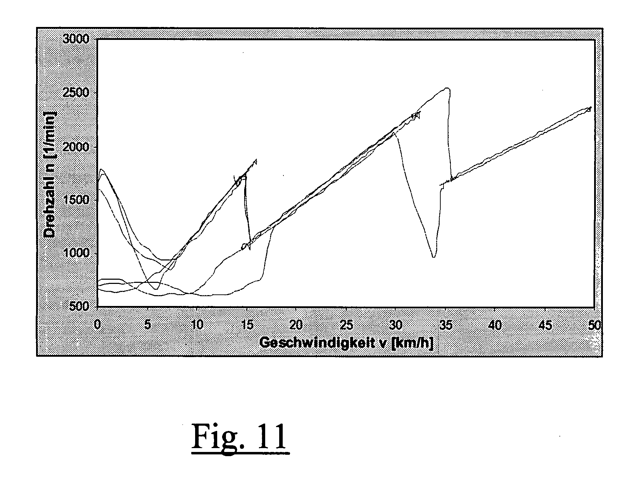

Figur 11 trägt die Drehzahl über der Geschwindigkeit auf, wodurch sich die Streuung für Bereiche, die mehrfach durchfahren werden, einfach erkennen lässt. Dabei muss berücksichtigen werden, dass sowohl Beschleunigungs- als auch VerzögerungsPhasen erfasst sind, die sich unterschiedlich auf den Verlauf auswirken. Es ist erkennbar, dass insbesondere die Anfahrvorgänge deutlich von einander abweichen. Diese Abweichungen sind beim Vergleich von mehreren Tests mit unterschiedlichen Fahrern oft noch wesentlich stärker ausgeprägt. Vor dem Hintergrund der Normierung ist es also sinnvoll, für diese Bereiche einen einheitlichen Verlauf zu erzeugen. Deshalb wird ein vergleichbar einfaches Vorgehen festgelegt, wonach die Drehzahl bis zum völlig eingekuppelten Zustand konstant bleibt.

In Bereichen der Gangwechsel ist es erforderlich, die Drehzahl unverändert zu lassen. Zwar ist auch an diesen Stellen eine fahrerseitige Streuung zu erwarten, jedoch kann diese deutlich von konfigurations-spezifischen Einflüssen überlagert sein. Insbesondere das Abfallen der Drehzahl nach dem Auskuppeln sowie das Hochdrehen des Motors nach dem Herunterschalten sind stark fahrzeugabhängig. Auf einen künstlichen Verlauf wird in diesen Bereichen verzichtet, damit die fahrzeugseitigen Einflüsse nicht verloren gehen. Aus dem gleichen Grund werden auch die realen Leerlauf-Phasen beibehalten.

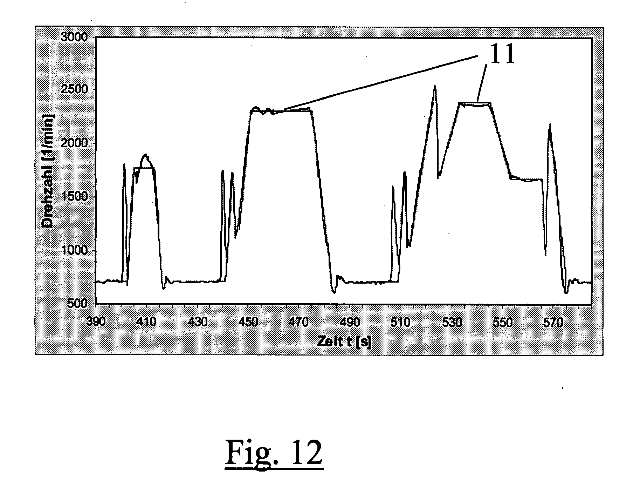

Die in Figur 12 dargestellte normierte Drehzahl weist die beschriebenen Eigenschaften auf. Außerdem verläuft sie in den eingekuppelten Bereichen geradlinig. Dies stellt das Optimum dar.

Das Ergebnis dieser Simulation entspricht dem des realen Fahrzeugs, welches absolut genau der Sollfahrkurve gefolgt ist. Hierdurch wird der Fahrereinfluss nahezu vollständig eliminiert.

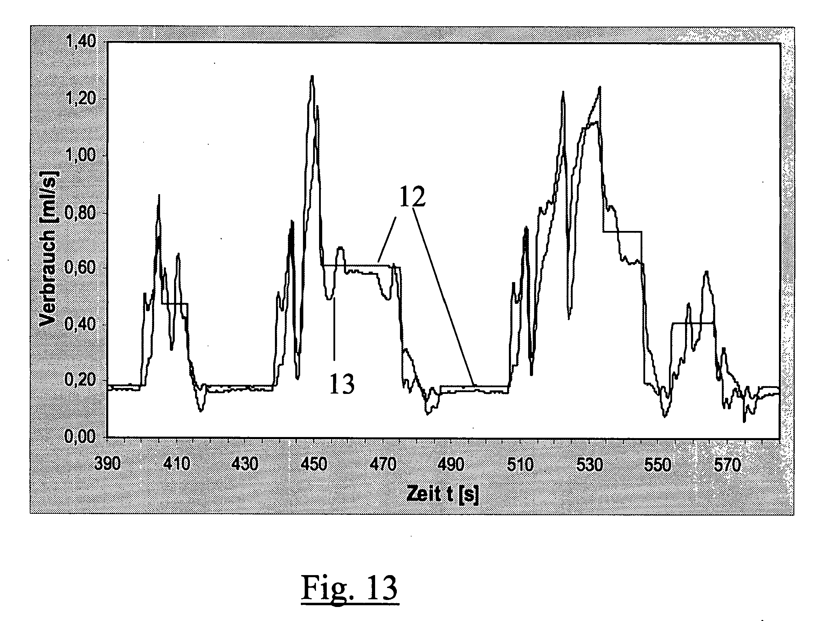

In Figur 13 ist das Ergebnis der Simulation dargestellt. Der mit den normierten Messgrößen Geschwindigkeit und Drehzahl simulierte Kraftstoffverbrauch (Kurve 12) ist dem realen Kraftstoffverbrauch (Kurve 13) überlagert. Erkennbar ist, wie der durch den Fahrer verursachte unregelmäßige Kraftstoffverbrauch geglättet ist. Mittels dieser vorteilhaften Eliminierung des Fahrereinflusses wird eine verbesserte Wiederholbarkeit der Kraftstoffverbrauchsmessungen erreicht, ohne dass die reale Fahrzeugverbrauchscharakteristik verfälscht wird.

**Patentansprüche**

1. Verfahren zur Bestimmung des Kraftstoffverbrauchs und/oder der Abgasemissionen von Kraftfahrzeugen an einem Rollenprüfstand, der für Kraftstoffverbrauchs- und Abgasmessungen geeignet ist, wobei der Kraftstoffverbrauch und/oder die Abgasemissionen über eine vorgegebene Fahrkurve ermittelt werden, und wobei eine Abweichung von Ausgangsgrößen von zumindest einer Eingangsgröße abhängig ist, wobei Eingangsgrößen, die einen Einfluss auf den Kraftstoffverbrauch haben, wie der Kraftstoffverbrauch selber während des Tests aufgezeichnet werden, **dass** mit den aufgezeichneten Daten ein neuronales Netz trainiert wird, das nach einer Trainingsphase eine Ausgangsgröße in Abhängigkeit der Eingangsgröße beschreibt,
**dass** sodann eine normierte Sollfahrkurve und/oder eine Drehzahlkurve vorgegeben wird, mit der das an einem realen Fahrzeug trainierte neuronale Netz die Ausgangsgröße simuliert,
so dass die simulierte Ausgangsgröße der des realen Fahrzeugs entspricht, allerdings derart, als wäre das Fahrzeug der Sollfahrkurve exakt gefolgt
**dadurch gekennzeichnet, dass**
die Eingangsgröße eine Fahrpedalstellung ist, die normiert wird, wobei als Eingangsgröße eine Betätigungsgeschwindigkeit und/oder Beschleunigung des Fahrpedals normiert wird.

2. Verfahren nach Anspruch 1,
**dadurch gekennzeichnet, dass**
eine der Sollfahrkurve entsprechende Soll-Fahrpedalstellung ermittelt wird

3. Verfahren nach einem der Ansprüche 1 oder 2,
**dadurch gekennzeichnet, dass**
die Ausgangsgröße ein Kraftstoffverbrauch ist.

4. Verfahren nach einem der vorhergehenden Ansprüche,
**dadurch gekennzeichnet, dass**
ein Diagnosewerkzeug (ATI) und Daten aus der Motorsteuerung als Eingangsgröße (Fahrpedalstellung) und als Ausgangsgröße (Kraftstoffverbrauch) verwendet werden.

**Claims**

1. Method for determining the fuel consumption and/or the exhaust gas emissions of motor vehicles on a roller-type test stand which is suitable for measuring fuel consumption and exhaust gas, wherein the fuel consumption and/or exhaust gas emissions are determined by means of a predefined driving curve, and wherein a deviation of output variables is dependent on at least one input variable, wherein input variables which influence the fuel consumption, such as the fuel consumption itself, are recorded during the test, in that a neural network is trained with the recorded data and describes an output variable as a function of the input variable after a training phase,
in that a standardized setpoint driving curve and/or a rotational speed curve with which the neural network which is trained on a real vehicle simulates the output variable are/is then predefined,
with the result that the simulated output variable corresponds to that of the real vehicle, but in such a way as if the vehicle were following the setpoint driving curve precisely,
**characterized in that**
the input variable is an accelerator pedal position which is standardized, wherein an activation speed and/or acceleration of the accelerator pedal is standardized as an input variable.

2. Method according to Claim 1,
**characterized in that**
a setpoint accelerator pedal position which corresponds to the setpoint driving curve is determined.

3. Method according to one of Claims 1 or 2,
**characterized in that**
the output variable is a fuel consumption.

4. Method according to one of the preceding claims,
**characterized in that**
a diagnostic tool (ATI) and data from the engine controller are used as an input variable (accelerator pedal position) and as an output variable (fuel consumption).

**Revendications**

1. Procédé de détermination de la consommation de carburant et/ou des émissions de gaz d'échappement de véhicules automobiles lors d'un banc d'essai en situation de roulement, ledit procédé étant adapté aux mesures de consommation de carburant et de gaz d'échappement, la consommation de carburant et/ou les émissions de gaz d'échappement étant calculées sur un virage parcouru prédéfini et un écart des grandeurs de sortie dépendant d'au moins une grandeur d'entrée, les grandeurs d'entrée ayant une influence sur la consommation de carburant, telle que la consommation de carburant elle-même, étant enregistrées pendant l'essai, un réseau neuronal étant entraîné avec les données enregistrées, ledit réseau décrivant une grandeur de sortie en fonction de la grandeur d'entrée après une phase d'entraînement ;
une courbe de trajectoire théorique normalisée et/ou une courbe de vitesse de rotation étant prédéfinie et servant au réseau neuronal entraîné au niveau d'un véhicule réel pour simuler la grandeur de sortie ;
de sorte que la grandeur de sortie simulée corresponde au véhicule réel, toutefois en faisant en sorte que le véhicule suive exactement la courbe de trajectoire théorique ;
**caractérisé en ce que** :

la grandeur d'entrée est une position de pédale d'accélérateur normalisée, la grandeur d'entrée normalisée étant une vitesse d'actionnement et/ou d'accélération de la pédale d'accélérateur.

2. Procédé selon la revendication 1, **caractérisé en ce qu'**une position de pédale d'accélérateur théorique correspondant à la courbe de trajectoire théorique est calculée.

3. Procédé selon l'une quelconque des revendications 1 ou 2, **caractérisé en ce que** la grandeur de sortie est une consommation de carburant.

4. Procédé selon l'une quelconque des revendications précédentes, **caractérisé en ce qu'**un outil de diagnostic (ATI) et les données provenant de la commande de moteur servent de grandeur d'entrée (position de pédale d'accélérateur) et de grandeur de sortie (consommation de carburant).

Fig. 1

Fig.4

Fig.5

Fig.2

Fig.3

Fig. 6

Fig. 7

Fig. 8

Fig. 9

Fig. 10

Fig. 11

Fig. 12

EP 1 855 091 B1

Fig. 13

EP 1 855 091 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1538426 A1
- US 5372035 A
- US 4444047 A